# EUROPÄISCHE PATENTSCHRIFT

(11) **EP 3 237 848 B1**
(45) Veröffentlichungstag und Bekanntmachung des Hinweises auf die Patenterteilung: **06.05.2020**
(21) Anmeldenummer: 15804146.7
(22) Anmeldetag: 03.12.2015
(51) Int. Cl.: G01F 1/58

(54) **MAGNETISCH-INDUKTIVES DURCHFLUSSMESSGERÄT**
MAGNETO-INDUCTIVE FLOWMETER
DÉBITMÈTRE ÉLECTROMAGNÉTIQUE

(30) Priorität: 22.12.2014 DE 102014119451
(43) Veröffentlichungstag der Anmeldung: 01.11.2017
(73) Patentinhaber: Endress+Hauser Flowtec AG, 4153 Reinach (CH)
(72) Erfinder: RUPP, Stefan, 79227 Schallstadt (DE); SULZER, Thomas, 4058 Basel (CH); BROBEIL, Wolfgang, 79576Weil am Rhein (DE); POPP, Oliver, 4104 Oberwil (CH)
(74) Vertreter: Andres, Angelika Maria
(86) Internationale Anmeldenummer: PCT/EP2015/078535
(87) Internationale Veröffentlichungsnummer: WO 2016/102168

(56) Entgegenhaltungen:
- EP-A1- 2 196 779
- EP-A1- 2 600 119
- EP-A2- 2 187 180
- WO-A1-2010/069869
- DE-A1-102006 060 442
- JP-A- H04 295 722
- JP-A- 2004 177 200
- US-A- 4 899 592

## Beschreibung

Die vorliegende Erfindung betrifft ein Magnetisch-induktives Durchflussmessgerät.

Durchflussmessgeräte werden nach unterschiedlichen Kriterien differenziert. Das weitverbreitetste Differenzierungskriterium ist die Differenzierung nach Messprinzipien. Entsprechend sind z.B. Coriolis-Durchflussmessgeräte, Ultraschall-Durchflussmessgeräte, Thermische Durchflussmessgeräte, Vortex-Durchflussmessgeräte, magnetisch-induktive Durchflussmessgeräte, SAW (surface acoustic wave) - Durchflussmessgeräte, V-Cone Durchflussmessgeräte und Schwebekörper-Durchflussmessgeräte bekannt. Entsprechende Durchflussmessgeräte sind teilweise von der Anmelderin oder anderen Anbietern im Handel erhältlich. Im vorliegenden Fall geht es speziell um ein Magnetisch-induktives Durchflussmessgerät.

Ein weiteres Differenzierungsmerkmal ist, ob das Durchflussmessgerät ein Messrohr aufweist oder ob das Durchflussmessgerät auf ein herkömmliche Rohrleitung bzw. Prozessleitung aufgesetzt oder angebaut werden kann, ohne dass der Mediumsfluss innerhalb der Rohrleitung bei der Installation des Durchflussmessgerätes zu unterbrechen. Typische Ultraschallmessgeräte der vorbeschriebenen Art sind sogenannte Clamp-On Ultraschall-Durchflussmessgeräte. Durchflussmessgeräte mit Messrohren werden Inline-Durchflussmessgeräte bekannt.

Seit geraumer Zeit sind Inline-Durchflussmessgeräte bekannt mit Messrohren, welche einen reduzierten Querschnitt aufweisen. Ein entsprechendes Messrohr ist beispielsweise in der US 4,899,592A dargestellt.

Die EP2196779A1 beschreibt ein allgemeines magnetisch-induktives Durchflussmessgerät mit einem Messrohr, welches einen Ein- und Auslaufbereich mit einem ersten Querschnitt sowie ein Mittelsegment mit einem zweiten Querschnitt aufweist, wobei das Messrohr aus Kunststoff hergestellt sein kann.

Die JP04295722A lehrt ein weiteres magnetisch-induktives Durchflussmessgerät mit einem Messrohr, welches Messrohr einen variierenden Querschnitt aufweist.

Die DE102006060442A1 schlägt ein magnetisch-induktives Durchflussmessgerät vor, bei welchem ein Magnetsystem seitlich auf ein Messrohr aufsteckbar ist.

Die Mehrzahl an Konzepten für Messrohre mit reduziertem Querschnitt beruhen auf Messrohren mit einem metallischen Rohr mit innenliegendem Kunststoff-Liner. Für eine einheitliche Linerdicke muss der Liner entweder besonders gegossen werden oder bereits vorgeformt in das Messrohr beidseitig eingesetzt und anschließend mittig verschweißt werden. Dies führt zu einem höheren Herstellungsaufwand und ggf. zu Messabweichungen.

Es sind zudem Kunststoffrohre, z.B. aus Polyethylen oder Polyamid, bekannt, welche als Messrohre in magnetisch-induktiven Messrohren zum Einsatz kommen können. Grundsätzlich ist die Verwendung dieser Kunststoffrohre allerdings begrenzt, da sich diese Rohre bei Änderung des Mediumsdruckes ausdehnen oder zusammenziehen. Aufgrund der Änderung des Durchmessers eines Messrohres tritt ein Messfehler auf. Bei einem Messrohr mit reduziertem Querschnitt würde die Aufweitungstendenzen im Bereich des reduzierten Querschnitts sogar noch zunehmen.

Die US 8,286,503 schlägt zur Lösung dieses Problems Versteifungsrippen vor, welche eine Stabilisierung des Messrohrquerschnitts ermöglichen.

Ausgehend vom vorbekannten Stand der Technik ist es nunmehr Aufgabe der vorliegenden Erfindung ein magnetisch-induktives Durchflussmessgerät mit einem Messrohr mit reduziertem Querschnitt bereitzustellen, welches einfach und kostengünstig herstellbar ist und bei welchem geringere Messfehler bei Druckschwankungen auftreten.

Die vorliegende Erfindung löst diese Aufgabe durch ein magnetisch-induktives Durchflussmessgerät mit den Merkmalen des Anspruchs 1.

Magnetisch induktives Durchflussmessgerät umfassend ein Messrohr an welchem ein Magnetsystem und mehrere Messelektroden angeordnet oder festgelegt sind. Üblicherweise stehen sich die Messelektroden, an welchen eine induzierte Spannung abgegriffen wird, diametral am Messrohr gegenüber. Es sind allerdings auch andere konstruktive Varianten bekannt. Insbesondere können zusätzliche Messelektroden umfangsverteilt am Messrohr angeordnet sein oder bei unvollständig gefüllten Messrohren eher im unteren Bereich des Messrohres. Es können auch mehrere Messelektroden paarweise hintereinander angeordnet sein.

Im Verlauf der Entwicklungsgeschichte von magnetisch-induktiven Durchflussmessgeräten sind darüber hinaus eine Vielzahl weiterer Anordnungen veröffentlicht.

Ein Magnet umfasst in der gängigsten Bauweise zwei sich diametral gegenüberliegende Feldspulen deren Verbindungsachse senkrecht zur Messrohrachse und zur Messelektrodenachse angeordnet ist.

Ein erfindungsgemäßes magnetisch-induktives Durchflussmessgerät umfasst ein Messrohr an welchem ein Magnetsystem und zumindest zwei oder mehr Messelektroden angeordnet und/oder festgelegt sind. Messelektroden sind zumeist stiftförmig ausgebildet und direkt oder indirekt mit der Messrohrwandung verbunden. Es sind aber auch im Messrohr vergossene Metallsegmente bekannt, welche als Messelektroden dienen oder auch Ringelektroden.

Das Messrohr weist einen Ein- und Auslaufbereich mit einem ersten Querschnitt auf. In diesen Bereichen erfolgt zudem der Anschluss des Messrohres an eine Prozessleitung. Der Ein- und Auslaufbereich weist in den meisten Fällen einen kreisrunden Querschnitt auf. Es sind allerdings auch in seltenen Fällen mehreckige, so z.B. rechteckige oder dreieckige, Prozessleitungen bekannt und entsprechend sind der Aus- und Einlaufbereich ausgestaltet.

Das erfindungsgemäße Messrohr weist ein Mittelsegment zwischen dem Ein- und Auslaufbereich auf, welches einen zweiten Querschnitt aufweist. Dieses Mittelsegment dient der Strömungskonditionierung und kann eine Verringerung der geraden Einlaufstrecke vor dem eigentlichen Durchflussmessgerät ermöglichen.

In dem Mittelsegment des Messrohres sind die Messelektroden angeordnet. Das Mittelsegment wird erfindungsgemäß zumindest im Bereich der Messelektroden von einer Rohrhalterung umfasst wird, welche einer Querschnittsverformung des zweiten Querschnitts entgegenwirkt.

Die Rohrhalterung umschließt bzw. umgreift in ihrer Gesamtheit das Messrohr im Mittelsegment vorzugsweise im vollem Umfang. Dabei muss ich die Rohrhalterung jedoch nicht über die gesamte Breite des Mittelsegments, bezogen auf die Längsachse des Messrohres, erstrecken. Da es in erster Linie um die Verhinderung der Änderung der Länge des Messelektrodenabstandes geht, sollte aber die Rohrhalterung zumindest im Bereich der Messelektroden angeordnet sein und in diesem Bereich das Messrohr stützen. Dieser vorgenannte Bereich beginnt vorzugsweise nicht mehr als 2cm, vorzugsweise weniger als 1cm von den Messelektroden entfernt.

Dadurch wird eine druckbedingte Aufweitung des Messrohres durch Mediumsdrücke im Bereich der Verbindungsachse der Messelektroden sicher vermieden und ein konstanter Messelektrodenabstand gewährleistet.

Vorteilhafte Ausgestaltungen der Erfindung sind Gegenstand der Unteransprüche.

Es ist von Vorteil, wenn an oder auf der Rohrhalterung das Magnetsystem angeordnet und/oder festgelegt ist. Damit kann eine kompakte Bauweise realisiert werden. Sofern die Rohrhalterung aus magnetisch-leitfähigem Metall ist, kann ein Polschuh entfallen, da die Rohrhalterung die Funktionalität des Polschuhs übernehmen kann.

Es ist von Vorteil, wenn das Mittelsegment zumindest zwei sich gegenüberliegende ebene Flächen aufweist, welche als Auflageflächen für das Magnetsystem bestimmt sind. Damit ist eine einfache Montierbarkeit des Magnetsystems gewährleistet.

Gerade die Querschnittform soll über einen großen Bereich von Mediumsdrücke gewährleistet werden. In einer Ausgestaltungsvariante können daher die Rohrhalterung aus zumindest zwei ebenen Platten bestehen, welche miteinander verbunden sind. Die Platten können insbesondere aus Metall bestehen.

Die Platten können die ebenen Flächen zumindest bereichsweise überragen. An diesen überragenden Stellen können Befestigungsmittel, so z.B. Bolzen angebracht werden.

Eine besonders hohe Festigkeit der Rohrhalterung ergibt sich sofern die ebenen Platten mittels Bolzen miteinander verbunden sind.

Idealerweise schließt die Rohrhalterung das Mittelsegment vollumfänglich ein.

Es ist besonders von Vorteil, wenn das Messrohr ein Kunststoff-Messrohr ist. Einerseits lässt sich die Geometrie der Querschnittsverengung im Mittelsegment bereits bei der Ausformung des Rohres beachten und andererseits kommt hier die Rohrhalterung besonders vorteilhaft zum Einsatz, da gerade Kunststoffrohre druckbedingten Qherschnittsveränderungen unterliegen. Entsprechende Kunststoffmaterialien aus welchen das Messrohr bestehen kann sind vorzugsweise Polyethylen, Polyamid, Polypropylen und/oder Polyvinylchlorid.

Es ist insbesondere von Vorteil, wenn jede der Platten eine Dicke aufweist, welche zumindest der Wandstärke des Messrohres entspricht.
Es ist von Vorteil, wenn zwischen dem Magnetsystem und dem Messrohr lediglich, also ausschließlich, die ebenen Platten angeordnet sind. So können z.B. Feldbleche. entfallen.

Das Mittelsegment kann besonders vorteilhaft einen minimalen Durchmesser dₘᵢₙ und einen maximalen Querschnitt dmax aufweisen, wobei dₘᵢₙ zumindest 20% geringer ist, vorzugsweise zumindest 50% geringer ist, als dmax.

Die Erfindung wird nachfolgend anhand der beigefügten Figuren anhand eines Ausführungsbeispiels näher erläutert. Es zeigen:
Fig. 1 Perspektivansicht eines Messrohres eines magnetisch-induktiven Durchflussmessgerätes;
Fig. 2 Vorderansicht eines Messrohres eines magnetisch-induktiven Durchflussmessgerätes;
Fig. 3 seitliche Schnittansicht entlang der Längsachse des Messrohres;
Fig. 4 schematische Schnittansicht eines erfindungsgemäßen magnetisch-induktiven Durchflussmessgerätes und
Fig. 5 schematische Detailansicht des erfindungsgemäßen Durchflussmessgerätes

Der Aufbau und das Messprinzip eines magnetisch-induktiven Durchflussmessgerätes sind grundsätzlich bekannt. Gemäß dem Faraday'schen Induktionsgesetz wird in einem Leiter, der sich in einem Magnetfeld bewegt, eine Spannung induziert. Beim magnetisch-induktiven Messprinzip entspricht der fließende Messstoff dem bewegten Leiter. Ein Magnetfeld mit konstanter Stärke wird durch ein Magnetsystem erzeugt. Dabei kann es sich vorzugsweise um zwei Feldspulen handeln, die diametral zueinander auf gleicher Höhe der Messrohrachse A eines Messrohres am Messrohr angeordnet sind. Senkrecht dazu befinden sich an der Rohrinnenwand des Messrohres zwei oder mehr Messelektroden, welche die beim Durchfließen des Messstoffes erzeugte Spannung abgreifen. Die induzierte Spannung verhält sich proportional zur Durchflussgeschwindigkeit und damit zum Volumendurchfluss. Das durch die Feldspulen aufgebaute Magnetfeld wird durch einen getakteten Gleichstrom wechselnder Polarität erzeugt. Dies gewährleistet einen stabilen Nullpunkt und macht die Messung unempfindlich gegenüber Einflüssen durch Mehrphasenstoffe, Inhomogenitäten in der Flüssigkeit oder geringer Leitfähigkeit. Es sind magnetisch-induktive Durchflussmessgeräte mit Spulenanordnungen mit mehr als zwei Feldspulen bekannt und anderer geometrischer Anordnung bekannt. Die Anmelderin stellt seit mehreren Jahrzehnten magnetisch-induktive Durchflussmessgeräte in unterschiedlichen Abmessungen und Ausgestaltungen beispielsweise unter dem Namen "Promag" her.

Das vorbeschriebene Durchflussmessgerät stellt eines der üblichsten Aufbauten dar. Darüber hinaus sind auch magnetisch-induktive Durchflussmessgeräte mit mehr als zwei Feldspulen und mehr als zwei Messelektroden bekannt.

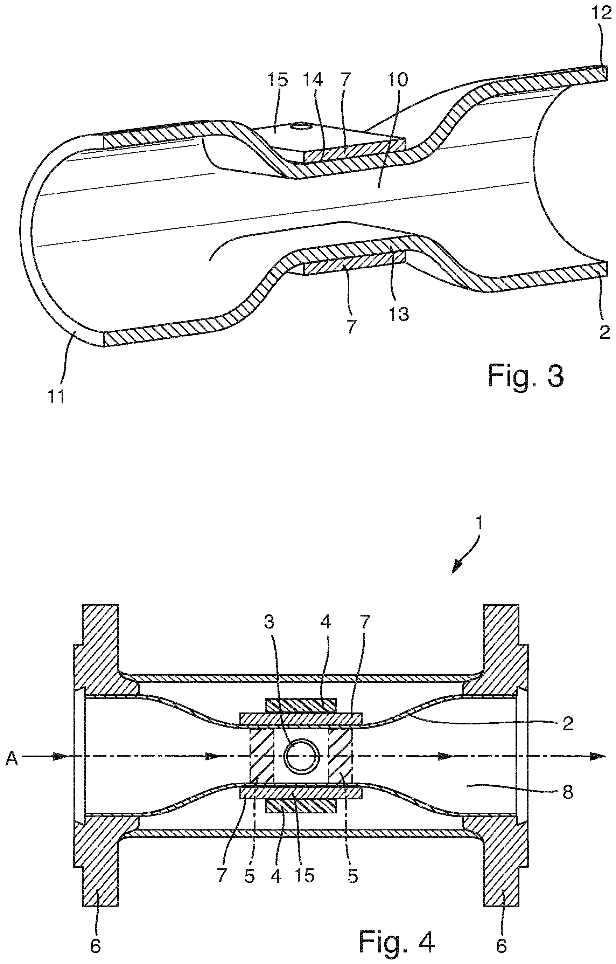

Fig. 4 zeigt ein magnetisch-induktives Durchflussmessgerät 1 mit einem Kunststoffrohr 2, welches eine Messrohrachse A aufweist. Das Kunststoffrohr kann aus einem für den Rohrbau üblichen Material ausgebildet sein. Dabei kommen insbesondere Polyethylen oder Polyamid-Verbindungen in Betracht.

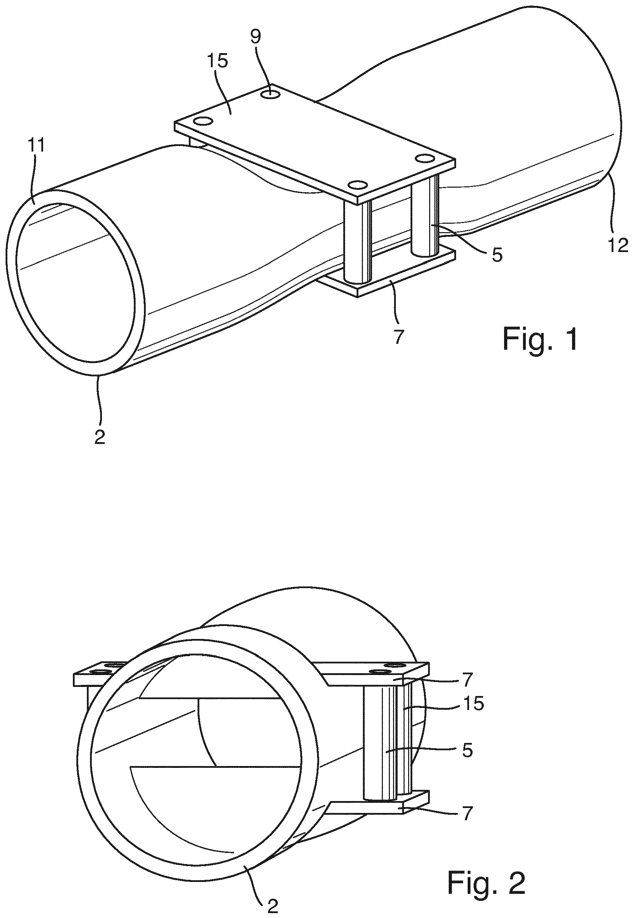

Das Stützrohr 3 weist endständig Flansche 6 auf, welche jeweils über zumindest eine Anschlussfläche verfügen. Diese Anschlussfläche dient zum Anschluss an ein Prozessrohr einer Prozessleitung, welches in Fig. 1 nicht näher abgebildet ist.

Das magnetisch-induktive Durchflussmessgerät weist zudem ein Messrohr 2 welches in den Fig. 1-3 näher dargestellt ist.

Das Messrohr 2 weist in seinem Einlauf- und Auslaufbereich 11 und 12 vorzugsweise einen kreisrunden Querschnitt auf. Dieser Querschnitt verändert sich über den Verlauf des Messrohres 2.

Das Rohr weist dabei ein Mittelsegment 10 auf, in welchem ein minimaler Rohrdurchmesser zumindest um 20%, vorzugsweise um 50% geringer ist als der Rohrdurchmesser im Einlaufbereich 11 oder Auslaufbereich 12. Der maximale Rohrdurchmesser ist gegenüber dem minimalen Rohrdurchmesser zumindest um 20%, vorzugsweise 50% größer.
Das Medium übt einen gewissen Druck auf das Messrohr aus. Besonders intensiv wird dieser Mediumsdruck in dem Bereich der Verengung, also im Mittelsegment 10. Gerade bei Messrohren aus Kunststoff ist eine Querschnittsaufweitung oft schon ab Mediumsdrücken von 3 bar oder höher zu beobachten. Dies ist ein grundsätzliches Problem, da der Abstand der Messelektroden 3 bei einer Querschnittsaufweitung geändert wird, wodurch Fehlmessungen auftreten. Die Querschnittsverengung vergrößert dieses Problem zusätzlich. Um druckbedingten Querschnittsaufweitungen dieses Querschnitts des Mittelbereichs entgegenzuwirken weist das Messrohr eine Rohrhalterung auf, welche im konkreten Fall durch eine Platten-Bolzen-Konstruktion ist. Allerdings sind je nach Rohrform auch andere konstruktive Möglichkeiten denkbar.

Die Querschnittsverengung ist in Fig. 1-4 nur schematisch dargestellt. Es kann sich z.B. dabei bei der Querschnittsverengung auch um einen Rechteckquerschnitt handeln.

Eine entsprechende Herstellung des Messrohres kann durch Umformen wie folgt erfolgen:
Zunächst wird in ein Kunststoffrohr mit durchgehendem kreisrunden Querschnitt entlang der Messrohrachse ein Stempel eingeschoben wird. Dieser weist die Außenkontur auf, welche das Lumen des Messrohres in dem umgeformten Mittelsegment annehmen soll. Der Stempel kann z.B. aus zwei Hälften bestehen, welche in der Mitte zusammengeführt werden.

Auf diesen Stempel wird das Rohr nunmehr aufgepresst. Dies erfolgt vorzugsweise unter Wärmeeinwirkung, z.B. bei Temperaturen über 100°C.

Im Verformungsvorgang können vorzugsweise ebene Flächen 13 und 14 ausgebildet werden. Die Flächennormalen der beiden Ebenen liegen dabei vorzugsweise übereinander oder verlaufen parallel zueinander.

Auf der Wandung des Kunststoffrohres liegen zumindest im Bereich der ebenen Flächen 13 und 14 eine Versteifungslage angeordnet.

Diese Versteifungslage ist vorzugsweise nur in dem Bereich ausgebildet, in welchem sich die ebenen Flächen erstrecken.
Die Versteifungslage kann in Fig. 1-3 zwei parallel zueinander angeordnete ebene Platten 7 umfassen. Diese ebenen Platten 7 sind vorzugsweise aus einem massiven Metall, insbesondere Stahl, ausgebildet. Es können auch alternativ mehrere übereinander geschichtete Metallbleche, z.B. Stahlbleche sein.

Die ebenen Platten liegen in Fig. 1-3 auf den ebenen Flächen 13 und 14 des Kunststoffrohres 2 auf. Sie sind durch Bolzen 5 miteinander verbunden.

Die Bolzen 5 und die ebenen Platten 7 sind kraftschlüssig mit der Wandung des Kunststoffrohres verbunden. Sie können beispielsweise direkt auf dem Kunststoffrohr aufliegen. Es können jedoch auch weitere Zwischenlagen zwischen dem Kunststoffrohr 2 und den Platten 7 angeordnet sein.

Alternativ zu den Platten und Bolzen 5 und 7 kann auch ein Metallband oder mehrere Metallbänder zur Stabilisierung des Bereichs 10 verwendet werden.

Die Versteifungslage ist dabei vorzugsweise ausschließlich im Bereich 10, in welchem sich die ebenen Flächen 13 und 14 erstrecken, angeordnet.

Das vorbeschriebene Messrohr 2 kann sodann in einem magnetisch-induktiven Messgerät eingesetzt werden. Dies ist in Fig. 4 gezeigt.

Auf jeder Versteifungsplatte 7 ist ein Magnetsystem angeordnet. Dieses Magnetsystem umfasst in Fig. 4 zwei Magnetspulen welche sich diametral gegenüberstehen auf den ebene Platten 7 aufliegen. Das Magnetsystem erzeugt ein Magnetfeld.

90° versetzt zu dem Magnetsystem sind zwei Messelektroden 3 angeordnet, welche sich diametral am Messrohr gegenüberstehen.

Bei erhöhtem Mediumsdruck durch das Messmedium 8 erfolgt durch die kraftschlüssige Verbindung der Versteifungslage mit dem Kunststoffrohr keine oder eine stark-verminderte Aufweitung des Messelektrodenabstandes und des Abstandes der Magnetspulen.

Dadurch kann ein Kunststoffrohr anstelle eines Metallrohres mit Liner eingesetzt werden, in welchem ein reduzierter Querschnitt realisiert ist. Das entsprechende Messrohr erfüllt zudem die für das Messprinzip notwendigen Anforderungen an die Diffusionsdichtigkeit, mechanische Festigkeit und elektrische Isolierung, so dass fertige Messrohr keine Nachteile gegenüber anderen marktüblichen Messrohren für magnetisch-induktive Durchflussmessgeräte aufweist.

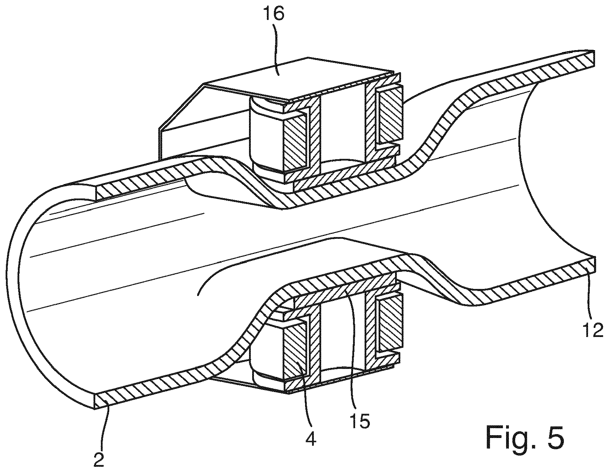

Fig. 5 zeigt einen detaillierteren Aufbau des magnetisch-induktiven Durchflussmessgerätes mit den auf der Rohrhalterung 15 aufgesetzten Feldspulen 4 und auf den Feldspulen angeordneten Feldrückführungsblech 16. Die Messelektroden wurden zur Vereinfachung nicht dargestellt

### Bezugszeichen

- 1: Magnetisch-induktives Durchflussmessgerät
- 2: Messrohr
- 3: Messelektrode
- 4: Feldspule
- 5: Bolzen
- 6: Flansch
- 7: Platte
- 8: Messmedium
- 9: Verbindungsstelle
- 10: Mittelsegment
- 11: Einlaufbereich
- 12: Auslaufbereich
- 13: Ebene Fläche
- 14: Ebene Fläche
- 15: Rohrhalterung
- 16: Feldrückführungsblech

## Patentansprüche

1. Verfahren zur Herstellung eines Messrohrs (2) für ein magnetisch-induktives Durchflussmessgerät (1), wobei das
magnetisch-induktive Durchflussmessgerät (1) umfasst:
ein Messrohr (2) an welchem ein Magnetsystem und zwei oder mehr Messelektroden (3) angeordnet und/oder festgelegt sind,
wobei das Messrohr (2) einen Ein- und Auslaufbereich (11,12) mit einem ersten Querschnitt aufweist und wobei das Messrohr ein Mittelsegment (10) zwischen dem Ein- und Auslaufbereich (11, 12) aufweist, welches einen zweiten Querschnitt aufweist, wobei das Messrohr ein Kunststoffrohr ist,
wobei in dem Mittelsegment (10) des Messrohres (2) die Messelektroden (3) angeordnet sind,
**dadurch gekennzeichnet, dass**
das Mittelsegment (10) zumindest im Bereich der Messelektroden (3) von einer Rohrhalterung (15) umfasst wird, welche einer durch ein durch das Messrohr strömendes Medium verursachten Querschnittsverformung des zweiten Querschnitts entgegenwirkt,
wobei der zweite Querschnitt durch Umformung des Messrohrs eingestellt wird.

2. Verfahren nach Anspruch 1, **dadurch gekennzeichnet, dass** an oder auf der Rohrhalterung (15) das Magnetsystem, insbesondere Feldspulen (4), angeordnet und/oder festgelegt ist.

3. Verfahren nach Anspruch 1 oder 2, **dadurch gekennzeichnet, dass** das Mittelsegment (10) zumindest zwei sich gegenüberliegende ebene Flächen (13 und 14) aufweist, welche als Auflageflächen für das Magnetsystem bestimmt sind.

4. Verfahren nach einem der vorhergehenden Ansprüchen, **dadurch gekennzeichnet, dass** die Rohrhalterung (15) aus zumindest zwei Platten (7) besteht, welche vorzugsweise eben ausgebildet sind und welche miteinander verbunden sind.

5. Verfahren nach Anspruch 4, **dadurch gekennzeichnet, dass** die Platten (7) aus Metall bestehen.

6. Verfahren nach Anspruch 3-5, **dadurch gekennzeichnet, dass** die Platten (7) die ebenen Flächen (13, 14) zumindest bereichsweise überragen.

7. Verfahren nach Anspruch 4, **dadurch gekennzeichnet, dass** die Platten (7) mittels Bolzen (5) miteinander verbunden sind.

8. Verfahren nach einem der vorhergehenden Ansprüche, **dadurch gekennzeichnet, dass** die Rohrhalterung (15) das Mittelsegment (10) vollumfänglich einschließt.

9. Verfahren nach einem der vorhergehenden Ansprüche, **dadurch gekennzeichnet, dass** das Messrohr (2) ein Kunststoff-Messrohr ist.

10. Verfahren nach einem der vorhergehenden Ansprüche, **dadurch gekennzeichnet, dass** das Messrohr (2) aus Polyethylen, Polyamid, Polypropylen und/oder Polyvinylchlorid besteht.

11. Verfahren nach einem der vorhergehenden Ansprüche, **dadurch gekennzeichnet, dass** jede der Platten (7) eine Dicke aufweist, welche zumindest der Wandstärke des Messrohres (2) entspricht.

12. Verfahren nach einem der vorhergehenden Ansprüche, **dadurch gekennzeichnet, dass** zwischen dem Magnetsystem, insbesondere zwischen den Feldspulen (4), und dem Messrohr (2) lediglich die ebenen Platten (7) angeordnet sind.

13. Verfahren nach einem der vorhergehenden Ansprüche, wobei das Mittelsegment (10) einen minimalen Durchmesser dₘᵢₙ und einen maximalen Querschnitt dmax aufweist und wobei dₘᵢₙ zumindest 20% geringer ist, vorzugsweise zumindest 50% geringer ist als dₘₐₓ.

14. Verfahren zur Herstellung eines Messrohrs (2) für ein magnetisch-induktives Durchflussmessgerät (1) nach Anspruch 1,
wobei der zweite Querschnitt durch Stempelpressen des Messrohrs eingestellt wird.

## Claims

1. Procedure for the manufacture of a measuring tube (2) for an electromagnetic flowmeter (1), wherein the electromagnetic flowmeter (1) comprises:
a measuring tube (2) on which a magnet system and two or more measuring electrodes (2) are arranged and/or fixed,
wherein the measuring tube (2) has an inlet and an outlet zone (11, 12) with a first cross-section and wherein the measuring tube comprises a middle segment (10) between the inlet zone and the outlet zone (11, 12), said segment having a second cross-section, wherein the measuring tube is a plastic tube,
wherein the measuring electrodes (3) are arranged in the middle segment (10) of the measuring tube (2),
**characterized in that**
the middle segment (10) is surrounded, at least in the area of the measuring electrodes (3), by a tube holder (15), said holder counteracting a cross-sectional deformation of the second cross-section caused by the medium flowing through the measuring tube,
wherein the second cross-section is set by the reshaping of the measuring tube.

2. Procedure as claimed in Claim 1, **characterized in that** the magnet system, particularly field coils (4), are arranged and/or fixed on the tube holder (15).

3. Procedure as claimed in Claim 1 or 2, **characterized in that** the middle segment (10) has least two plane surfaces (13 and 14) opposite one another, which act as support surfaces for the magnet system.

4. Procedure as claimed in one of the previous claims, **characterized in that** the tube holder (15) is made from at least two plates (7), which preferably have a flat design and which are connected with one another.

5. Procedure as claimed in Claim 4, **characterized in that** the plates (7) are made from metal.

6. Procedure as claimed in Claims 3 to 5, **characterized in that** the plates (7) at least partially project over the plane surfaces (13, 14).

7. Procedure as claimed in Claim 4, **characterized in that** the plates (7) are interconnected by means of bolts (5).

8. Procedure as claimed in one of the previous claims, **characterized in that** the tube holder (15) encloses the middle segment (10) entirely.

9. Procedure as claimed in one of the previous claims, **characterized in that** the measuring tube (2) is a plastic measuring tube.

10. Procedure as claimed in one of the previous claims, **characterized in that** the measuring tube (2) is made from polyethylene, polyamide, polypropylene and/or polyvinyl chloride.

11. Procedure as claimed in one of the previous claims, **characterized in that** each of the plates (7) has a thickness, which corresponds at least to the thickness of the wall of the measuring tube (2).

12. Procedure as claimed in one of the previous claims, **characterized in that** only the plane plates (7) are arranged between the magnet system, particularly between the field coils (4), and the measuring tube (2).

13. Procedure as claimed in one of the previous claims, **characterized in that** the middle segment (10) has a minimum diameter dₘᵢₙ and a maximum cross-section dₘₐₓ, and wherein dₘᵢₙ is at least 20 % less than, preferably at least 50 %, less than dₘₐₓ.

14. Procedure for the manufacture of a measuring tube (3) for an electromagnetic flowmeter (1) as claimed in Claim 1,
wherein the second cross-section is set by stamp-pressing the measuring tube.

## Revendications

1. Procédé destiné à la fabrication d'un tube de mesure (2) pour un débitmètre magnéto-inductif (1), pour lequel le débitmètre magnéto-inductif (1) comprend :
un tube de mesure (2), sur lequel sont disposés et/ou fixés un système magnétique et deux électrodes de mesure (2) ou plus,
procédé pour lequel le tube de mesure (2) présente une zone d'entrée et de sortie (11, 12) avec une première section et procédé pour lequel le tube de mesure comprend un segment médian (10) entre la zone d'entrée et la zone de sortie (11, 12), lequel segment présente une deuxième section, le tube de mesure étant un tube en plastique,
les électrodes de mesure (3) étant disposées dans le segment médian (10) du tube de mesure (2),
**caractérisé**
**en ce que** le segment médian (10) est entouré, au moins dans la zone des électrodes de mesure (3), par un support de tube (15), lequel support agit contre une déformation de la deuxième section provoquée par le produit s'écoulant à travers le tube de mesure,
la deuxième section étant réglée par formage du tube de mesure.

2. Procédé selon la revendication 1, **caractérisé en ce que** le système magnétique, notamment les bobines de champ (4), sont disposés et/ou fixés sur le support de tube (15).

3. Procédé selon la revendication 1 ou 2, **caractérisé en ce que** le segment médian (10) présente au moins deux surfaces planes (13 et 14) opposées, lesquelles servent de surfaces d'appui pour le système magnétique.

4. Procédé selon l'une des revendications précédentes, **caractérisé en ce que** le support de tube (15) est constitué d'au moins deux plaques (7), lesquelles sont de préférence conçues de façon plane et lesquelles sont reliées entre elles.

5. Procédé selon la revendication 4, **caractérisé en ce que** les plaques (7) sont en métal.

6. Procédé selon les revendications 3 à 5, **caractérisé en ce que** les plaques (7) débordent au moins partiellement des surfaces planes (13, 14).

7. Procédé selon la revendication 4, **caractérisé en ce que** les plaques (7) sont reliées entre elles au moyen de boulons (5).

8. Procédé selon l'une des revendications précédentes, **caractérisé en ce que** le support de tube (15) entoure entièrement le segment médian (10).

9. Procédé selon l'une des revendications précédentes, **caractérisé en ce que** le tube de mesure (2) est un tube de mesure en matière plastique.

10. Procédé selon l'une des revendications précédentes, **caractérisé en ce que** le tube de mesure (2) est en polyéthylène, en polyamide, en polypropylène et/ou en chlorure de polyvinyle.

11. Procédé selon l'une des revendications précédentes, **caractérisé en ce que** chacune des plaques (7) présente une épaisseur, qui correspond au moins à l'épaisseur de paroi du tube de mesure (2).

12. Procédé selon l'une des revendications précédentes, **caractérisé en ce que** les plaques planes (7) sont seulement disposées entre le système magnétique, notamment entre les bobines de champ (4) et le tube de mesure (2).

13. Procédé selon l'une des revendications précédentes, **caractérisé en ce que** le segment médian (10) présente un diamètre minimal dₘᵢₙ et une section maximale dₘₐₓ, dₘᵢₙ étant au moins de 20 % , de préférence au moins de 50 %, inférieur à dₘₐₓ.

14. Procédé destiné à la fabrication d'un tube de mesure (3) pour un débitmètre magnéto-inductif (1) selon la revendication 1,
pour lequel la deuxième section est réglée par pressage du tube de mesure.
